# DEMANDE DE BREVET EUROPEEN

(11) **EP 2 505 385 A1**
(43) Date de publication de la demande: **03.10.2012**
(21) Numéro de dépôt: 12160587.7
(22) Date de dépôt: 21.03.2012
(51) Int. Cl.: B60C 5/00, B60C 5/02, B60C 17/06

(54) **Roue anti-crevaison pour cycle**

(30) Priorité: 28.03.2011 FR 1100913
(71) Demandeur: Manufacture Roues Elastomeres, 76270 Neufchatel-en-Bray (FR)
(72) Inventeur: Vuillequez, Patrick, 76270 NEUFCHATEL-EN-BRAY (FR)
(74) Mandataire: Bureau Duthoit Legros Associés

(57) **Abrégé**

La présente invention est relative à une roue (1) de cycle comprenant :
- une jante (2), présentant une âme (3) et deux épaulements latéraux (4), circulaires,
- une enveloppe extérieure (5), présentant une surface de roulement (6), une surface intérieure (7), ainsi que deux bords libres (8), circulaires, en appui sur lesdits épaulements latéraux (4) de ladite jante (2),
- un bandage (9) constitué d'une pièce torique dans un matériau élastomère à cellules fermées, de densité croissante du centre vers la périphérie dudit bandage (9), ledit bandage (9) étant disposé entre ladite enveloppe extérieure (5) et la jante (2), ledit bandage (9) présentant une surface de contact (10) coopérant avec la surface intérieure (7) de ladite enveloppe extérieure (5), ainsi qu'un talon (11), situé entre lesdits épaulements latéraux (4), ledit talon (11) comprimant lesdits deux bords libres (8) de ladite enveloppe extérieure (5), respectivement, contre lesdits deux épaulements latéraux (4) de ladite jante, **caractérisé en ce que** ledit bandage (9) occupe au moins 60%, de préférence au moins 70% du volume entre ladite enveloppe extérieure (5) et ladite jante (2) et en ce que ladite roue (1) présente, en outre, des moyens (12 ;13) pour solidariser la surface de contact (10) du bandage (9) à ladite enveloppe extérieure (5).

## Description

L'invention concerne une roue de cycle et trouvera une application particulière comme roue de vélo.

Les roues de vélo comportent, bien souvent, une jante sur laquelle est montée une enveloppe extérieure, appelée pneu, constituant une surface de roulement pour la roue, ainsi qu'une chambre à air qui peut être mise sous pression grâce à une pompe et une valve solidaire de la chambre à air.

Le pneu assure une protection contre les agressions et peut, grâce à sa composition et ses dessins sculptés sur sa surface de roulement, présenter une bonne résistance à l'abrasion et une excellente adhérence au sol.

Afin d'éviter que les écrous, maintenant en place les rayons de la roue, situés en fond de jante, ne viennent en contact avec la chambre à air et puissent les crever, on interpose entre ces écrous une bande de fond de jante.

Ce montage, appelé traditionnel, présente de bonnes performances de confort et de rendement pour l'utilisateur.

Il présente toutefois les inconvénients suivants :
- la nécessité pour l'utilisateur de gonfler régulièrement la chambre air,
- la possibilité du pneu de déjanter en utilisation si la chambre à air est mal gonflée,
- la possibilité du pneu de crever, rendant le pneu inutilisable.

On connaît également du document FR-2.310.230 un bandage plein en une pièce indégonflable qui comprend un talon, destiné au montage sur la jante par collage (résine époxy), et une surface de roulement. Le bandage étant collé à la jante, cette roue est indémontable et peut difficilement être réparée. Dans ce document FR-2.310.230, le bandage, à savoir le coeur du bandage et sa surface de roulement, forme une pièce d'un seul tenant, obtenue lors du moulage. Le procédé de fabrication de ce pneu est complexe, coûteux.

On connaît également du document FR-2 607 448, considéré par le demandeur comme état de la technique le plus proche, une roue comprenant une enveloppe extérieure, une jante, et un bandage dans un matériau alvéolaire à cellules fermées.

Le bandage présente une surface de contact coopérant avec la surface intérieure de ladite enveloppe extérieure, non liée à cette surface intérieure.

Afin de permettre le maintien de l'ensemble enveloppe/bandage sur la jante, le bandage présente un talon situé entre deux épaulements latéraux de la jante, ledit talon comprimant deux bords libres de ladite enveloppe extérieure, respectivement, contre lesdits deux épaulements latéraux de ladite jante.

Afin de permettre le montage de l'ensemble enveloppe extérieure/bandage sur la jante on utilise un outillage spécial qui comprend un plateau tournant et des galets de pression actionnés par vérins. Dans un premier temps, on insère manuellement le bandage dans l'enveloppe extérieure, puis l'un des bords libres, circulaires, de l'enveloppe extérieure entre les deux épaulements latéraux de la jante.

La jante est alors positionnée sur le plateau tournant. Les galets de l'outillage permettent, lors de la mise en rotation de la roue, de rentrer à force l'autre bord libre de l'enveloppe entre les deux épaulements de la jante, en comprimant le talon du bandage.

Cette roue présente pour avantage d'être démontable (de préférence avec un outillage) et est par ailleurs considérée comme increvable. Cette roue présente toutefois pour inconvénient majeur un rendement médiocre pour l'utilisateur, en comparaison avec une roue traditionnelle à chambre à air. A l'usage, la résistance au pédalage est supérieure en comparaison d'une roue traditionnelle.

Selon les documents FR-2.639.880 ou encore FR-2755 400, cette baisse de rendement serait la conséquence du bandage alvéolaire qui occuperait un volume trop important dans le pneumatique (enveloppe extérieure).

Afin d'améliorer le rendement, et selon le document FR-2 639 880, le bandage occupe moins de 30% du volume interne de l'enveloppe extérieure, encore appelé pneumatique.

Afin d'améliorer le rendement, et selon le document FR-2 755 400, le bandage alvéolaire, expansé, à cellules fermées, occupe un volume compris entre 5% et 50% du volume intérieur du pneumatique.

Dans ces documents FR-2.639.880 ou encore FR-2755 400, le bandage occupant un faible volume du pneu, il est nécessaire de prévoir une chambre à air. Si cette chambre à air crève, telle qu'illustrée à la figure 2 du document FR-2 755 400, il est certes possible de rouler mais dans des conditions de confort particulièrement précaires.

Le but de la présente invention est de proposer une roue de cycle qui pallie les inconvénients précités, de fabrication aisée, qui peut être utilisée sans aucun gonflage, et dont la résistance au roulement est diminuée en comparaison avec l'état de la technique le plus proche connu par le demandeur.

Aussi l'invention concerne une roue de cycle comprenant :
- une jante, présentant une âme et deux épaulements latéraux, circulaires,
- une enveloppe extérieure, présentant une surface de roulement, une surface intérieure, ainsi que deux bords libres, circulaires, en appui sur lesdits deux épaulements latéraux de ladite jante,
- un bandage constitué d'une pièce torique dans un matériau élastomère à cellules fermées, de densité croissante du centre vers la périphérie dudit bandage, ledit bandage étant disposé entre ladite enveloppe extérieure et la jante, ledit bandage présentant une surface de contact destinée à coopérer avec la surface intérieure de ladite enveloppe extérieure, ainsi qu'un talon, situé entre lesdits épaulement latéraux, ledit talon comprimant lesdits deux bords libres de ladite enveloppe extérieure, respectivement, contre lesdits deux épaulements latéraux de ladite jante.

Selon l'invention, ledit bandage occupe au moins 60%, de préférence au moins 70% du volume entre ladite enveloppe extérieure et ladite jante et ladite roue présente, en outre, des moyens pour solidariser la surface de contact du bandage à ladite enveloppe extérieure.

L'inventeur a constaté que le mauvais rendement d'une roue, selon le document FR-2 607 448, serait la conséquence de la formation par le bandage, en aval de la zone de contact de la roue avec le sol, d'un bourrelet en appui sur la surface interne de l'enveloppe extérieure. Ce bourrelet se crée sous la pression entre la roue et le sol, en raison des propriétés élastomères du matériau constituant le bandage. Ce bourrelet crée une résistance au roulement à l'origine de la baisse de rendement.

Afin d'augmenter et/ou de diminuer la résistance au roulement, selon l'invention, la surface de contact du bandage et la paroi de l'enveloppe extérieure sont solidarisées par des moyens. Ces moyens ont pour objet de supprimer, voire de fortement limiter la création de ce bourrelet B.

Selon l'invention, ledit talon du bandage comprime lesdits deux bords libres de ladite enveloppe extérieure, respectivement, contre lesdits deux épaulements latéraux de ladite jante, rendant l'ensemble enveloppe/bandage indéjantable en condition normale d'utilisation. Cet ensemble peut toutefois être démonté avec un outillage spécifique.

Par ailleurs, selon l'invention, ledit bandage occupe au moins 60%, de préférence au moins 70% du volume entre ladite enveloppe extérieure et ladite jante, permettant l'utilisation de la roue dans des conditions particulièrement satisfaisantes, même si la roue ne présente pas de chambre à air, ou encore dans le cas où ladite roue présente une chambre à air, non gonflée ou crevée.

Selon des caractéristiques optionnelles de l'invention, prises seules ou en combinaison :
- lesdits moyens pour solidariser ladite surface de contact du bandage à ladite enveloppe extérieure sont constitués par des moyens de collage tels que de la colle, ou encore un adhésif double face ;
- lesdits moyens pour solidariser ladite surface de contact du bandage à ladite enveloppe extérieure sont constitués par des moyens mécaniques ;
- lesdits moyens mécaniques sont constitués par des agrafes traversant ladite enveloppe extérieure et ledit bandage ;
- ledit bandage occupe au moins au moins 80% du volume entre ladite enveloppe extérieure et ladite jante ;
- la roue présente une chambre à air, et dans laquelle le bandage présente un évidement, interne, circulaire recevant ladite chambre à air, ainsi qu' une fente qui s'étend de la surface du talon, tournée vers ladite âme de la jante, jusqu'au évidement ;
- ledit bandage présente une densité entre 0.15 et 0.40 ;
- les deux bords libres, circulaires de ladite enveloppe extérieure présentent respectivement des armatures métalliques ,
- le matériau du bandage est constitué au moins à 85% en poids d'éthylène vinyle acétate.

L'invention concerne également un procédé de fabrication d'une roue de cycle, conforme à l'invention, comprenant les étapes suivantes :
- on fabrique ledit bandage dans un matériau élastomère alvéolaire, expansé, à cellules fermées, par injection d'une matière dans un moule, cuisson de ladite matière dans ledit moule, et démoulage, et indépendamment
- on fabrique ladite enveloppe extérieure, et successivement
- on solidarise ladite surface de contact dudit bandage à ladite enveloppe extérieure.

Selon l'invention, le bandage et ladite enveloppe sont fabriqués, indépendamment, l'un de l'autre, et sont solidarisés, ultérieurement par tout moyen adapté.

L'invention concerne également un vélo comprenant au moins une roue conforme à l'invention.

L'invention sera mieux comprise à la lecture de la description suivante accompagnée des dessins parmi lesquels :
- la figure 1 est une vue de coupe d'une roue, conforme à l'invention selon un mode de réalisation,
- la figure 2 est une vue de détail du cadre I-I, tel qu'illustré à la figure 1,
- la figure 3 est une vue de coupe illustrant une étape de montage de la roue telle qu'illustré à la figure 1,
- la figure 4 est une vue de coupe d'une roue, conforme à l'invention selon un second mode de réalisation,
- la figure 5 est une vue de coupe illustrant en détail l'agrafage de l'enveloppe extérieure et du bandage de la roue, telle qu'illustrée à la figure 4,
- la figure 6 est une vue de coupe illustrant, pour une roue de l'état de l'art, selon les constatations de l'inventeur, la formation d'un bourrelet à l'origine d'une perte de rendement.

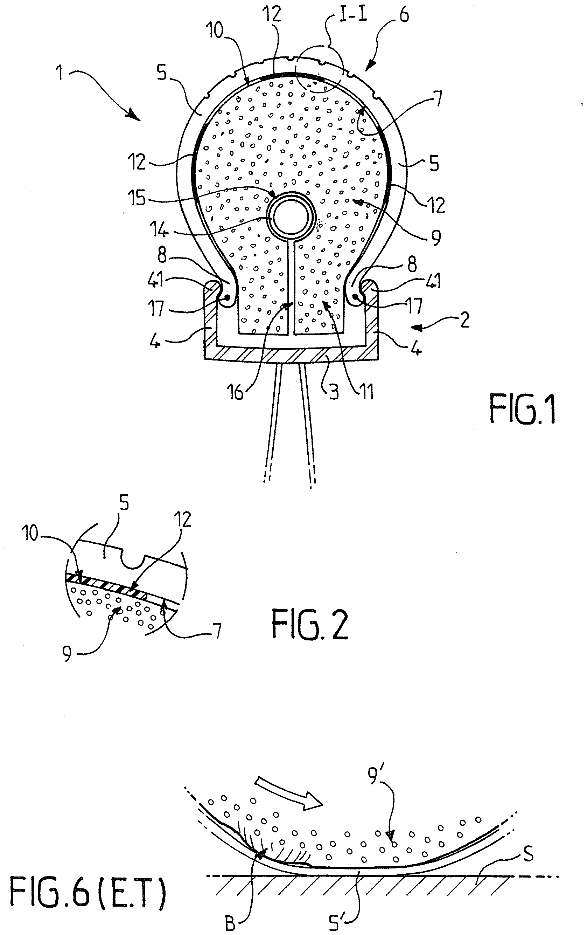

Nous décrivons brièvement la figure 6 qui est une illustration partielle, selon une vue de coupe, du comportement d'une roue, selon le document FR 2 607 448, lors du pédalage.

Pour rappel, la roue selon le document FR 2.607.448 comprend une enveloppe extérieure 5', une jante (non illustrée), et un bandage 9' dans un matériau alvéolaire à cellules fermées.

Le bandage 9' présente une surface de contact coopérant avec la surface intérieure de ladite enveloppe, non liée à cette surface. Afin de permettre le maintien de l'ensemble enveloppe/bandage sur la jante, le bandage présente un talon situé entre deux épaulements latéraux de la jante, ledit talon comprimant deux bords libres de ladite enveloppe extérieure, respectivement, contre lesdits deux épaulements latéraux de ladite jante.

Lors du pédalage, l'inventeur a constaté la présence d'un bourrelet B en aval de la zone de contact de la roue avec le sol S. Ce bourrelet serait responsable d'une résistance au roulement importante.

Aussi l'invention concerne une roue 1 de cycle comprenant :
- une jante 2, présentant une âme 3 et deux épaulements latéraux 4, circulaires,
- une enveloppe extérieure 5 présentant une surface de roulement 6, une surface intérieure 7, ainsi que deux bords libres 8, circulaires, en appui sur lesdits épaulements latéraux 4 de ladite jante 2,
- un bandage 9 constitué d'une pièce torique dans un matériau élastomère à cellules fermées, de densité croissante du centre vers la périphérie dudit bandage 9, ledit bandage étant disposé entre ladite enveloppe extérieure 5 et la jante 2.

Le bandage 9 peut éventuellement présenter une densité entre 0.15 et 0.40.

Eventuellement l'enveloppe extérieure 5 peut être en élastomère, au moins en partie, sculptée, présentant sur sa surface de roulement 6 des dessins en relief. L'enveloppe extérieure 5 peut être notamment une enveloppe du commerce.

Eventuellement et afin d'augmenter le maintien de l'enveloppe extérieure 9 sur la jante 2, les deux bords libres 8 de l'enveloppe extérieure 9 peuvent présenter, chacun, une armature 17, notamment métallique, noyée dans le matériau notamment élastomère de ladite enveloppe.

Eventuellement les deux épaulements latéraux 4 de la jante 2 peuvent présenter des nervures 41, tournées l'une vers l'autre, et destinées à crocheter les bords libres 8 de l'enveloppe 5.

Selon l'invention, ledit bandage 9 présente une surface de contact 10 coopérant avec la surface intérieure 7 de ladite enveloppe extérieure 5, ainsi qu'un talon 11, situé entre lesdits deux épaulements latéraux 4.

Le talon 11 comprime lesdits deux bords libres 8, circulaires, de ladite enveloppe extérieure 5, respectivement, contre lesdits deux épaulements latéraux 4 de ladite jante, permettant le maintien de l'ensemble enveloppe 9/bandage 9 sur la jante 2.

Selon l'invention, le bandage 9 occupe au moins 60%, de préférence au moins 70% du volume entre ladite enveloppe extérieure 5 et ladite jante 2, permettant l'utilisation de la roue 1 dans des conditions particulièrement satisfaisantes, même si la roue ne présente pas de chambre à air, ou encore dans le cas où ladite roue présente une chambre à air, non gonflée ou crevée.

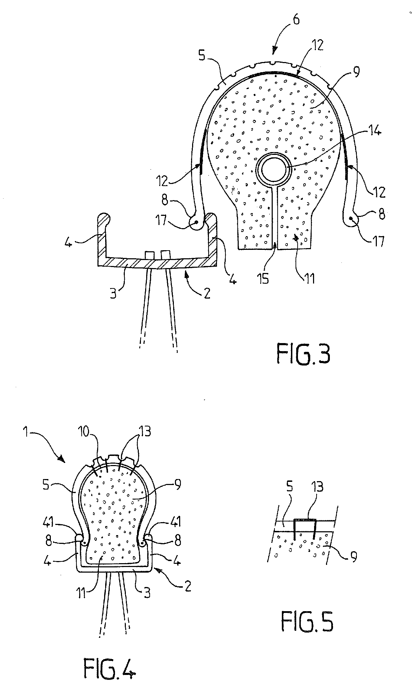

Selon un mode de réalisation, le bandage 9 occupe au moins 80% du volume entre ladite enveloppe et la jante. Par exemple selon le mode de réalisation de la figure 4, le bandage 9 occupe la totalité du volume disponible entre ladite enveloppe 5 et la jante 2.

Selon l'invention, la roue 1 présente, en outre, des moyens 12 ;13 pour solidariser la surface de contact 10 du bandage 9 à ladite enveloppe extérieure 5, évitant ou à tout le moins limitant ainsi fortement la création dudit bourrelet B.

L'inventeur a ainsi mesuré une forte baisse de la résistance au roulement avec une roue conforme à l'invention, en comparaison d'une roue selon le document FR 2 607 448.

Selon un mode de réalisation, lesdits moyens pour solidariser ladite surface de contact 10 du bandage 9 à ladite enveloppe extérieure 5 sont constitués par des moyens de collage 12 tels que de la colle, ou encore un adhésif double-face. Par exemple selon le mode de réalisation des figures 1 à 3, on solidarise la surface de contact 10 du bandage 9 à la surface intérieure 7 de l'enveloppe avec de la colle.

Selon un mode de réalisationn lesdits moyens pour solidariser ladite surface de contact 10 du bandage 9 à ladite enveloppe extérieure 5 sont constitués par des moyens mécaniques.

Tels qu'illustrés selon l'exemple de la figure 4, lesdits moyens mécaniques peuvent être constitués par des agrafes 13 traversant ladite enveloppe extérieure 5 et ledit bandage 9. De préférence, ces agrafes 13 peuvent être situées dans les rainures de la surface de roulement 6, sculptée, de l'enveloppe extérieure 5, de telle façon que les agrafes 13 soient en retrait de la surface de contact de l'enveloppe extérieure 9.

Selon un mode de réalisation, illustré notamment à la figure 4, la roue 1 peut être sans chambre à air.

Alternativement selon un mode de réalisation, notamment illustré à la figure 1, la roue peut présenter une chambre à air 14. Le bandage 9 présente alors un évidement 15, interne, circulaire recevant ladite chambre à air 14, ainsi qu'une fente 16 qui s'étend de la surface du talon 11, tournée vers ladite âme 3 de la jante 2, jusqu'au évidement 15.

Cette fente 16 permet, en déformant le bandage 9, d'ouvrir le bandage et ainsi l'insertion ou le retrait de ladite chambre à air 14 dans ledit évidemment 15. Cette chambre à air 14 présente une valve (non illustrée) solidaire de ladite chambre à air, destinée à ressortir au travers de l'âme de la jante 2 au travers d'un orifice (non illustré).

Dans ce mode de réalisation, la chambre à air 14 a pour unique fonction d'obtenir un surplus de confort. En raison de la place importante occupée par le bandage 9, qui occupe au moins 60%, de préférence au moins 70%, voire 80% du volume disponible entre ladite enveloppe extérieure 5 et la jante 2, la roue 1 peut être utilisée de manière tout à fait satisfaisante, en condition normale d'utilisation, même si l'utilisateur oubli de gonfler la chambre à air 14.

Selon un mode de réalisation, le matériau du bandage 9 est constitué au moins à 85% en poids d'éthylène vinyle acétate.

Ce bandage 9 peut être fabriqué au moyen d'une presse à injecter à partir d'une formulation comprenant, par exemple, en poids :
- Ethylène Vinyle Acétate au moins 85 %,
- agent expanseur de 2% à 6%,
- agent réticulent de 1% à 3%,
- stéarate de zinc de 1 % à 3%,
- colorant de 1 à 3%.

La matière formulée est amenée, après dosage mécanique, dans une trémie pour alimenter une vis sans fin, logée dans un fourreau entre 600 ° C et 150 ° C.

Cette matière est comprimée, malaxée et chauffée, produisant une pâte homogène qui est poussée par la vis au travers un orifice d'alimentation d'un moule. La pâte est cuite dans le moule à une température comprise entre 150° C et 250° C. Le moule est ensuite ouvert pour faire sortir la pièce, qui au contact de l'air se solidifie, obtenant ledit bandage. La fente 16 et l'évidemment 15 peut être obtenu lors du moulage, ou encore lors d'une étape ultérieure de coupe.

L'enveloppe extérieure 5 est fabriquée indépendamment du bandage 9.

Aussi le procédé conforme à l'invention, comprend les étapes suivantes :
- on fabrique le bandage 9 dans un matériau élastomère à cellules fermées, par injection d'une matière dans un moule, cuisson de ladite matière dans ledit moule, et démoulage, et indépendamment
- on fabrique ladite enveloppe extérieure 5, et successivement
- on solidarise ladite surface de contact 10 dudit bandage 9 à ladite enveloppe extérieure 9.

La fabrication indépendante du bandage 9, d'une part, et de l'enveloppe extérieure 5, d'autre part, permet une fabrication optimum de chacun de ces deux éléments 5,9, selon les contraintes qui leurs sont propres. Eventuellement l'enveloppe extérieure 5 peut être une enveloppe du commerce, usuellement utilisée avec une chambre à air pour constituer une roue traditionnelle.

L'étape de solidarisation de ladite surface de contact 10 du bandage 9 à ladite enveloppe extérieure 5 peut être mise en oeuvre, au moins en partie avant la mise en place, à force, de l'ensemble enveloppe extérieure/bandage sur la jante, par exemple à l'aide de colle, ou encore, lors d'une étape consécutive à cette mise en place, par exemple au moyen desdites agrafes 13.

Afin de permettre le montage de l'ensemble enveloppe extérieure 5/bandage 9 sur la jante 2 un outillage spécial est de préférence utilisé. Cet outillage comprend un plateau tournant et des galets de pression actionnés par vérins.

Dans un premier temps on insère manuellement le bandage 9 dans l'enveloppe extérieure 5, puis on insère l'un des bords libre 8, circulaire, de l'enveloppe extérieur 5 entre les deux épaulements latéraux 4 de la jante 2 (figure 3).

La roue est alors fixée sur le plateau tournant. Les galets de pression de l'outillage permettent, lors de la mise en rotation de la roue, de rentrer à force l'autre bord libre 8 de l'enveloppe extérieure 5 entre les deux épaulements 4 de la jante 2 en comprimant le talon 11 du bandage 9.

Naturellement d'autres modes de réalisations auraient pu être envisagées sans pour autant sortir du cadre de l'invention défini par les revendications ci-après.

## Revendications

1. Roue (1) de cycle comprenant :
- une jante (2), présentant une âme (3) et deux épaulements latéraux (4), circulaires,
- une enveloppe extérieure (5), présentant une surface de roulement (6), une surface intérieure (7), ainsi que deux bords libres (8), circulaires, en appui sur lesdits épaulements latéraux (4) de ladite jante (2),
- un bandage (9) constitué d'une pièce torique dans un matériau élastomère à cellules fermées, de densité croissante du centre vers la périphérie dudit bandage (9), ledit bandage (9) étant disposé entre ladite enveloppe extérieure (5) et la jante (2), ledit bandage (9) présentant une surface de contact (10) coopérant avec la surface intérieure (7) de ladite enveloppe extérieure (5), ainsi qu'un talon (11), situé entre lesdits épaulements latéraux (4), ledit talon (11) comprimant lesdits deux bords libres (8) de ladite enveloppe extérieure (5), respectivement, contre lesdits deux épaulements latéraux (4) de ladite jante, **caractérisé en ce que** ledit bandage (9) occupe au moins 60%, de préférence au moins 70% du volume entre ladite enveloppe extérieure (5) et ladite jante (2) et **en ce que** ladite roue (1) présente, en outre, des moyens (12 ;13) pour solidariser la surface de contact (10) du bandage (9) à ladite enveloppe extérieure (5).

2. Roue de cycle selon la revendication 1, dans laquelle lesdits moyens pour solidariser ladite surface de contact (10) du bandage (9) à ladite enveloppe extérieure (5) sont constitués par des moyens de collage (12) tels que de la colle, ou encore un adhésif double face.

3. Roue de cycle selon la revendication 1 dans laquelle lesdits moyens pour solidariser ladite surface de contact (10) du bandage (9) à ladite enveloppe extérieure (5) sont constitués par des moyens mécaniques.

4. Roue de cycle selon la revendication 3, dans laquelle lesdits moyens mécaniques sont constitués par des agrafes (13) traversant ladite enveloppe extérieure (5) et ledit bandage (9).

5. Roue de cycle selon l'une des revendications 1 à 4, dans laquelle ledit bandage (9) occupe au moins au moins 80% du volume entre ladite enveloppe extérieure (5) et ladite jante (2).

6. Roue de cycle selon l'une des revendications 1 à 5, présentant une chambre à air (14), et dans laquelle le bandage présente un évidemment (15), interne, circulaire recevant ladite chambre à air (14), ainsi qu'une fente (16) qui s'étend de la surface du talon (11), tournée vers ladite âme (3) de la jante (2), jusqu'au évidemment (15).

7. Roue de cycle selon l'une des revendications 1 à 6, dans laquelle ledit bandage (9) présente une densité entre 0.15 et 0.40.

8. Roue de cycle selon l'une des revendications 1 à 7, dans laquelle les deux bords libres (8), circulaires de ladite enveloppe extérieure (5) présentent respectivement des armatures métalliques (17).

9. Roue de cycle selon l'une des revendications 1 à 8, dans laquelle le matériau du bandage (9) est constitué au moins à 85% en poids d'éthylène vinyle acétate.

10. Procédé de fabrication d'une roue de cycle (1) selon l'une des revendications 1 à 9, comprenant les étapes suivantes :
- on fabrique le bandage (9) dans un matériau élastomère à cellules fermées, par injection d'une matière dans un moule, cuisson de ladite matière dans ledit moule, et démoulage, et indépendamment
- on fabrique ladite enveloppe extérieure (5), et successivement
- on solidarise ladite surface de contact (10) dudit bandage (9) à ladite enveloppe extérieure (9).

11. Vélo comprenant au moins une roue selon l'une des revendications 1 à 9.
